Europäisches Patentamt

European Patent Office

Office européen des brevets

(11) Numéro de publication : **0 484 226 A1**

# (12) DEMANDE DE BREVET EUROPEEN

(21) Numéro de dépôt : **91402893.1**

(22) Date de dépôt : **29.10.91**

(51) Int. Cl.⁵ : **F02B 33/04, F01N 3/20**

(30) Priorité : **02.11.90 FR 9013620**

(43) Date de publication de la demande :
**06.05.92 Bulletin 92/19**

(84) Etats contractants désignés :
**BE DE ES GB IT**

(71) Demandeur : **REGIE NATIONALE DES USINES RENAULT S.A.**
**34, Quai du Point du Jour**
**F-92109 Boulogne Billancourt Cédex (FR)**

(72) Inventeur : **Ahmed, Afif**
**6, rue des Saules**
**F-78870 Bailly (FR)**
Inventeur : **Hauet, Bertrand**
**Résidence Monceau, Bâtiment C3, Route de Chatou**
**F-78420 Carrieres sur Seine (FR)**

(54) **Moteur deux temps.**

(57) [1] Moteur deux temps à injection de carburant, du type comprenant au moins un cylindre (3) dans lequel est monté coulissant un piston (5), un vilebrequin relié à ce piston et logé dans un carter (2), le cylindre (3) communicant par ailleurs avec un circuit d'admission en air comburant sous pression (7) par au moins un orifice d'admission (17) disposé au voisinage du point mort bas du piston et avec un circuit d'échappement des gaz de combustion, caractérisé en ce que le dit circuit d'échappement débouche dans le cylindre (3) par au moins deux orifices d'échappement : un premier orifice (18) disposé sensiblement au niveau dudit orifice d'admission (17) et un second orifice (19) disposé au dessus du premier.

FiG.1.

La présente invention concerne les moteurs à combustion interne à cycle deux temps destines notamment à équiper les véhicules automobiles et elle concerne en particulier le circuit d'échappement des gaz de combustion utilisés pour être monté sur de tels moteurs.

Les moteurs à combustion interne le plus souvent utilisés pour équiper les véhicules fonctionnement suivant un cycle quatre temps : admission par une soupape du mélange air-carburant, suivi de sa compression, puis de sa détente après combustion et pour terminer échappement des gaz brûlés par une seconde soupape.

Dans un moteur deux temps, le piston remonte en comprimant les gaz dans le cylindre. Puis la combustion a lieu et l'énergie dégagée est récupérée dans le mouvement descendant du piston. Les temps d'admission et d'échappement sont généralement commandés par le piston qui se déplace devant les lumières d'admission et d'échappement, situées dans le corps du cylindre près du point mort bas : d'abord la lumière d'échappement permettant aux gaz brûlés de commencer à s'échapper, puis la lumière d'admission alimentant le cylindre en "air frais" sous pression. Ces gaz frais sont utilisés pour balayer les gaz brûlés vers l'échappement. De ce fait une partie des gaz frais sont perdus à l'échappement. lorsque le carburant est introduit simultanément aux gaz frais, c'est plus de 25% du carburant introduit dans la chambre de combustion quine brûlent pas et sont directement rejetés avec les gaz d'échappement dans l'atmosphère. Il en résulte une pollution considérable, de l'ordre de dix à vingt fois supérieure à celle d'un moteur quatre temps.

De nouvelles techniques ont été développées pour répondre au problème des pertes de carburant par l'échappement. Au lieu d'introduire conjointement le carburant et l'air frais comburant, seul ce dernier balaye les gaz de combustion.

L'introduction du carburant est retardée et se fait lorsque la lumière d'échappement est presque fermée pour en minimiser les pertes. Différents dispositifs d'injection ont été développés. La demanderesse a particulièrement étudié un dispositif d'injection directe à charge stratifiée permettant une forte réduction des émissions d'imbrûlés ainsi que des oxydes d'azote.

La dépollution naturelle engendrée par l'injection du carburant après la fermeture de la lumière d'échappement n'est néanmoins pas suffissante pour répondre aux législations anti-pollution de plus en plus draconiennes.

Il est donc nécessaire d'associer aux moteurs deux temps des pots catalytiques.

Malheureusement la conception des moteurs deux temps interdit d'utiliser pleinement toutes les possibilités de dépollution des pots catalytiques.

En effet les gaz brûlés sont vacués mélangés à l'air frais de balayage, il est donc impossible de travailler en milieu réducteur et de traiter les oxydes d'azotes ou NO$_x$.

La présente invention a donc pour but de diminuer la pollution des moteurs deux temps au-delà des normes les plus seèères et ce d'une manière particulièrement simple et économique.

A cet effet, l'invention a pour objet un moteur deux temps à injection de carburant, du type comprenant au moins un cylindre dans lequel est monté coulissant un piston, un vilebrequin relié à ce piston et logé dans un carter, le cylindre communicant par ailleurs avec un circuit d'admission disposé au voisinage du point mort bas du piston et avec un circuit d'échappement des gaz de combustion par au moins un orifice d'échappement. Ce moteur est caractérisé en ce que le dit circuit d'échappement débouche dans le cylindre par au moins des orifices d'échappement : un premier orifice disposé sensiblement au niveau dudit orifice d'admission et un second orifice disposé au-dessus du premier.

Selon une autre caractéristique de l'invention ledit second orifice est disposé dans la partie haute du cylindre.

Grâce à cet agencement le piston dans sa course descendante découvre d'abord ledit second orifice d'échappement bien avant que l'air frais de balayage ait envahi le cylindre ce qui permet de faire échapper des gaz brûlés très chauds représentatifs de la combustion et ne comportant pas l'oxygène apporté par le balayage.

Selon une autre caractéristique de l'invention ledit circuit d'échappement se décompose en une ligne principale d'échappement qui se scinde en deux au voisinage du cylindre : un premier conduit communiquant avec le cylindre par ledit premier orifice d'échappement et un second conduit communiquant avec le cylindre par ledit second orifice d'échappement.

Selon une autre caractéristique de l'invention le second conduit est muni, au voisinage du second orifice d'échappement, de moyens obturateurs commandes par un actionneur en fonction d'un ou plusieurs paramètres de marche du moteur.

Selon un mode de réalisation de l'invention, lesdits moyens obturateurs se composent d'un boisseau rotatif dont on peut concevoir qu'il soit debrayable et déphasable.

Selon un mode de réalisation de l'invention, ledit second conduit est muni d'un pot catalgique trifonctionnel.

Selon un mode de réalisation de l'invention, ladite ligne d'échappement est munie d'un pot catalgique d'oxydation.

Selon un mode de réalisation de l'invention, ledit second conduit est muni d'une sonde oxymétrique reliée au calculateur d'injection afin d'optimiser l'injection de carburant.

Selon un mode de réalisation de l'invention, les dimensions dudit premier orifice d'échappement sont plus grandes que celles dudit second orifice d'échappement.

D'autre particularités et avantages de l'invention résulteront encore de la description qui va suivre. Au dessin annexe, donné à titre d'exemple non limitatif, on a figuré un mode de réalisation du moteur deux temps suivant l'invention.

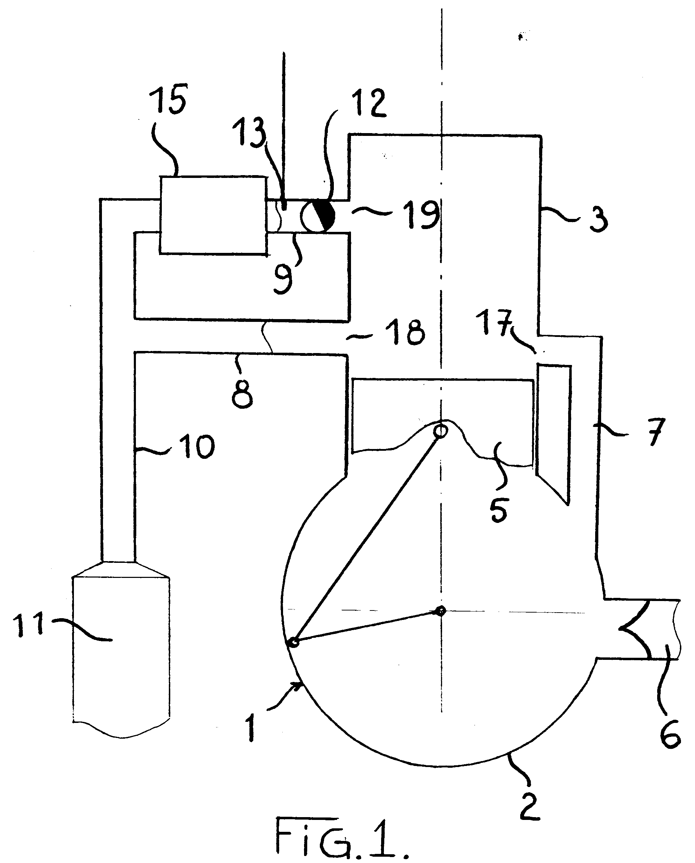

La figure 1 est une vue schématique en coupe partielle verticale d'un moteur suivant l'invention.

La figure 1 représente un moteur à combustion interne à cycle deux temps, repéré 1, dont seules ses parties constitutives intéressant l'invention ont été figurées.

Les pièces mobiles se composent principalement d'un piston 5, d'une bielle et d'un vilebrequin. L'injection de carburant est préférentiellement directe et l'allumage est obtenu par un moyen classique : système électrique à bougie d'allumage. La distribution en air comburant et en gaz de combustion est assurée par des ouvertures ou lumières 17, 18, 19 percées dans le bati du cylindre 3. Ces orifices sont ouverts en temps opportun par le va et vient du piston 5 dans le cylindre 3. Un conduit d'admission primaire 6 muni d'un clapet alimente le carter pompe 2 en air comburant. Lateralement au cylindre se trouve un canal de transfert 7 qui relie le carter au cylindre et qui débouche dans le cylindre par la lumière d'admission 17 et face à celle-ci, mais avec un léger décalage, se trouve la lumière d'échappement 18 par où débouche le conduit d'échappement 8. Ces deux orifices d'admission 17 et d'échappement 18 sont disposés au voisinage du point mort bas du piston 5. Un second conduit d'échappement 9 communique avec le cylindre 3 par l'ouverture 19. Cette ouverture 19 est disposée dans la partie haute du cylindre 3. Le conduit 9 coopère avec un système obturateur actionnable, comme par exemple un boisseau rotatif 12, commandé en fonction d'un ou plusieurs paramètres de marche du moteur 1. Le conduit 9 est muni en aval du système obturateur, d'une sonde oxymétrique 13 et d'un catalyseur "light off" trifonctionnel 15. Le conduit 9 rejoint ensuite tout comme le conduit 8 la ligne d'échappement 10 également munie d'un pot catalgique 11. Le pot catalytique 11 est de préférence de type catalyseur à oxydation à un lit.

Le fonctionnement du moteur 1 est le suivant.

La course ascendante du piston 5 crée un vide en dessous de lui dans le carter pompe 2.

Le clapet dans le conduit d'admission primaire 6 s'ouvre et une bouffée d'air comburant se précipite dans le carter 2 simultanément, au dessous du piston 5.

L'air comburant contenu dans le cylindre 3, venu d'une pulsation précédente, est comprimé, mélangé au carburant injecté et allumé en fin de course par l'étincelle électrique.

La course descendante du piston 5 produit dans le carter 2 une compression préalable de l'air comburant et le refoule dans le canal de transfert 7. Au dessus du piston 5 se produit la détente ou impulsion motrice des gaz enflammés, le piston découvre d'abord la lumière 19, ce qui permet un éventuel prééchappement des gaz de combustion suivant la position de l'obturateur 12 (ouverte ou fermée), puis en arrivant vers le point mort bas, le piston 5 découvre à peu près simultanément les deux orifices d'admission 17 et d'échappement 18. Les gaz frais passés dans le canal de transfert 7 débouchent dans le cylindre 3 et poussent devant eux les gaz brûlés et détendus pour qu'ils s'échappent à travers les orifices d'échappement 18 et 19.

L'existence du circuit de prééchappement 9, 19 a de multiples utilités.

Il permet notamment lors des démarrages à froid d'évacuer précocement lors de la course descendante du piston 5 une certaine quantité de gaz brûles et ce en l'absence de tout air de balayage. Ce prééchappement, soigneusement piloté par l'actionnement de l'obturateur 12, permet d'abord l'amorçage du catalyseur 15 grâce à la température initiale élevée des gaz puis, en utilisant le dégagement de chaleur généré par les réactions exothermiques de dépollution ainsi engendrées, l'amorçage du catalyseur 11.

De sorte qu'au point mort bas du piston les gaz d'échappement qui arrivent par le conduit 8 bien que fortement refroidis par l'air frais de balayage peuvent être néamoins correctement dépollués par le pot catalytique 11.

Il permet également lors des fonctionnements à fortes charges et hauts régimes de favoriser la dépollution des oxydes d'azote ($NO_x$). En ouvrant la lumière 19 grâce à l'obturateur 12, durant la détente jusqu'à l'ouverture des lumières 17 et 18, les gaz brûles qui s'échappent par le conduit 9 sont réducteurs ce qui permet le traitement des oxydes d'azote grâce au catalyseur 15 choisi préférentiellement trifonctionnel. Un tel traitement est impossible lorsque les gaz brûlés sont mélanges à l'oxygène de l'air de balayage.

Par ailleurs la sonde oxymétrique disposée dans le conduit 9 permet d'affiner le pilotage de l'injection en analysant les produits de combustion sans être perturbée par l'air de balayage. Ce montage permet donc la régulation de l'injection et ainsi d'optimiser la combustion ce qui a pour effet de réduire les émissions naturelles de produits polluants (HC, $NO_x$, CO). Par ailleurs le prééchappement permet de diminuer les ondes de pression qui prennent naissance dans la ligne d'échappement.

En effet lors de l'ouverture de la lumière 18, du fait du prééchappement opérée par l'ouverture de la lumière 19 la pression qui règne dans le cylindre est plus faible, ainsi l'intensité des phénomènes accoustiques qui vont se propager dans le conduit d'échappement 8 et revenir dans le cylindre 3 sera diminuée contribuant à moins perturber le balayage.

D'autre part en jouant sur les dimensions respectives des conduits 8 et 9, longueur, section, etc..., il est possible d'améliorer sensiblement les performances du moteur. Ainsi en réduisant les dimensions de la lumière 18 par rapport à une lumière classique d'échappement de moteur deux temps , on améliore très sensiblement la dépollution naturelle en particulier aux régimes intermédiaires à faibles charges.

Pour ce faire on maintient la lumière 19 fermée grâce au boisseau rotatif 12, le transvasement des gaz brûlés du cylindre 3 vers la ligne d'échappement 10 se fait alors uniquement par la lumière 18 avec une section réduite donc et un temps d'ouverture assez bref.

Ceci peut se substituer à un système à calage variable dont la principale caractéristique est de faire varier simultanément le calage et la section effective de la lumière d'échappement. Il est connu qu'il est nécessaire d'avoir un échappement perméable pour les performances de pleine charges à haut régime et moins perméable à bas régime.

Par ailleurs les dimensions de la lumière 19 sont préférentiellement inférieures à celles de la lumière 18.

Il est évident que l'invention n'est pas limitée aux réalisations décrites et qu'on peut y ajouter des variantes d'exécution. Ainsi le boisseau rotatif 12 peut être remplacé par une soupape commandée par une came ou par tout autre dispositif d'actionnement. Ainsi on peut utiliser plusieurs lumières de pééchappement pour le conduit 9 et/ou le conduit 8.

## Revendications

[1] Moteur deux temps à injection de carburant, du type comprenant au moins un cylindre (3) dans lequel est monté coulissant un piston (5), un vilebrequin relié à ce piston et logé dans un carter (2), le cylindre (3) communicant par ailleurs avec un circuit d'admission en air comburant sous pression (7) par au moins un orifice d'admission (17) disposé au voisinage du point mort bas du piston et avec un circuit d'échappement des gaz de combustion, caractérisé en ce que le dit circuit d'échappement débouche dans le cylindre (3) par au moins deux orifices d'échappement : un premier orifice (18) disposé sensiblement au niveau dudit orifice d'admission (17) et un second orifice (19) disposé au dessus du premier, dans la partie haute du cylindre (3).

[2] Moteur deux temps selon la revendication 1, caractérisé en ce que le dit circuit d'échappement se décompose en une ligne principale d'échappement (10) qui se scinde en deux conduits au voisinage du cylindre (3) : un premier conduit (8) communicant avec le cylindre (3) par la lumière (18) et un second conduit (9) communicant avec le cylindre (3) par l'orifice (19).

[3] Moteur deux temps selon la revendication 2, caractérisé en ce que le conduit (9) est muni au voisinage de l'orifice (19) de moyens obturateurs commandés par un actionneur en fonction d'un ou plusieurs paramètres de marche du moteur.

[4] Moteur deux temps selon la revendication 3, caractérisé en ce que les dits moyens obturateurs se composent d'un boisseau rotatif ( 12).

[5] Moteur deux temps selon l'une quelconque des revendications 2 à 4, caractérisé en ce que ledit second conduit (9) est muni d'un pot catalytique trifonctionnel (15).

[6] Moteur deux temps selon l'une queconque des revendications 2 à 5, caractérisé en ce que ladite ligne d'échappement (10) est munie d'un pot catalytique d'oxydation (11).

[7] Moteur deux temps selon l'une quelconque des revendications 2 à 6, caractérisé en ce que ledit second conduit (9) est muni d'une sonde oxymétrique (13) reliée au calculateur d'injection afin d'optimiser l'injection de carburant.

[8] Moteur deux temps selon l'une quelconque des revendications 1 à 7, caractérisé en ce que les dimensions dudit premier orifice d'échappement (18) sont plus grandes que celles dudit second orifice d'échappement ( 19).

FiG.1.

# EP 0 484 226 A1

**Office européen des brevets**

# RAPPORT DE RECHERCHE EUROPEENNE

Numero de la demande

EP 91 40 2893

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-684 945 (RATEAU) | 1-3,8 | F02B33/04 |
| Y | * le document en entier * | 4-7 | F01N3/20 |
| | --- | | |
| Y | EP-A-0 278 191 (INSTITUT FRANCAIS DU PETROLE) <br> * colonne 2, ligne 37 - ligne 52 * <br> * colonne 6, ligne 7 - ligne 22; figure 3 * | 4 | |
| | --- | | |
| Y | DE-C-3 732 301 (COMUNA-METALL VORRICHTUNGS- UND MASCHINENBAU GMBH) <br> * le document en entier * | 5,7 | |
| | --- | | |
| Y | EP-A-0 339 969 (RICARDO GROUP PLC) <br> * colonne 5, ligne 24 - ligne 36; figures 1,2 * | 6 | |
| | ----- | | |

**DOMAINES TECHNIQUES RECHERCHES (Int. Cl.5 )**

F02B
F01N

Le présent rapport a été établi pour toutes les revendications

| Lieu de la recherche | Date d'achèvement de la recherche | Examinateur |
|---|---|---|
| LA HAYE | 09 JANVIER 1992 | HAKHVERDI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)